# DEMANDE DE BREVET EUROPEEN

(11) **EP 0 689 993 A1**
(43) Date de publication de la demande: **03.01.1996**
(21) Numéro de dépôt: 95401565.7
(22) Date de dépôt: 29.06.1995
(51) Int. Cl.: B65B 9/20, B65B 51/30

(54) **Machine d'emballage utilisant un film souple ainsi que l'emballage obtenu**

(30) Priorité: 01.07.1994 FR 9408178
(71) Demandeur: FLEXICO FRANCE S.A.R.L., F-60119 Henonville (FR)
(72) Inventeur: Bois, Henri Georges, 92200 Neuilly sur Seine (FR)
(74) Mandataire: Texier, Christian

(57) **Abrégé**

La présente invention concerne une machine de formation, remplissage et fermeture automatique d'emballages à base de films (1) en matériau souple, en particulier de films munis de profilés de fermeture (3), caractérisée par le fait qu'elle comprend deux ensembles de pinces (110, 150) conçus pour solliciter des bandes opposées de l'ébauche (2) des sachets, l'un au moins de ces deux ensembles (110, 150) étant adapté pour autoriser un glissement contrôlé entre les parois (A, B) de l'ébauche (2) et lesdites pinces (110, 150), et des moyens de commande (230, 270) adaptés pour déplacer les deux ensembles de pinces (110, 150) d'une position d'ouverture vers la position de fermeture et pour déplacer, l'un au moins des deux ensembles (110, 150) vers l'extérieur.

## Description

La présente invention concerne le domaine des machines de formation, remplissage et fermeture automatiques d'emballages à base de films souples, par exemple en matériau thermoplastique, en particulier à base de films comportant des profilés de fermeture, notamment à glissière mâle et femelle complémentaires.

On a déjà proposé de nombreuses machines à cet effet. On pourra trouver des exemples de celles-ci dans les documents US-A-4894975, US-A-4876842, US-A-5046300 et US-A-5127208.

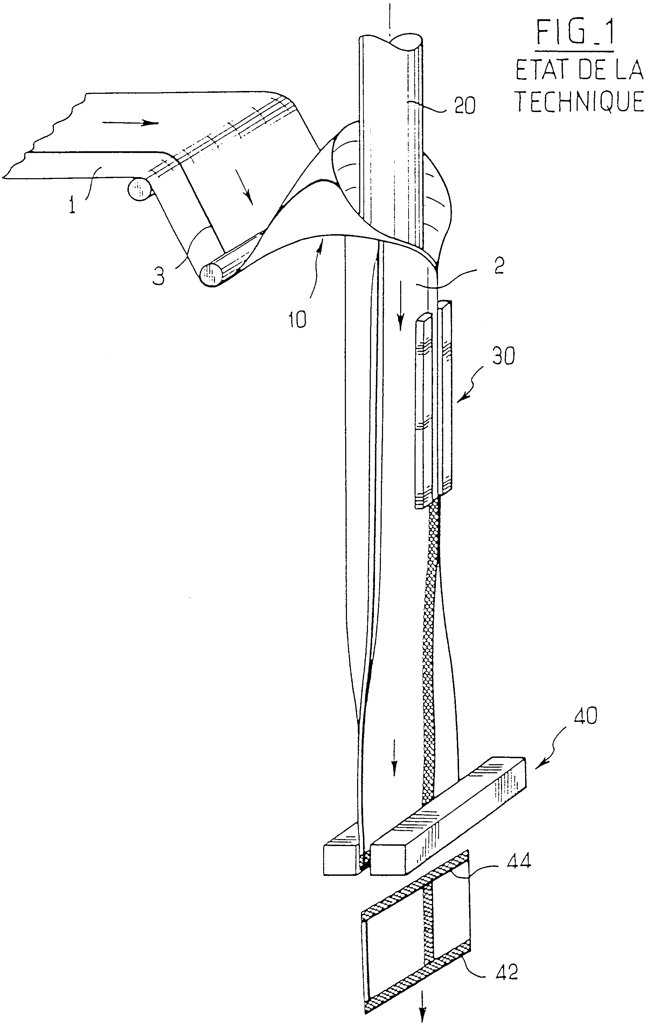

Comme on l'a représenté sur la figure 1 annexée, la plupart des machines automatiques connues pour la formation, le remplissage et la fermeture d'emballages à base de film en matériau thermoplastique comprennent :
- un col de formage 10 qui reçoit en entrée le film 1 à l'état plan en provenance d'un dérouleur et fournit en sortie le film conformé en tube 2,
- une goulotte de remplissage 20 qui débouche dans ce col de formage 10 et par conséquent dans ledit tube 2,
- des moyens 30 de soudure longitudinale 31 pour souder les bords du film et fermer le tube 2 longitudinalement, et
- des moyens 40 aptes à générer séquentiellement une première soudure transversale 42 avant qu'un produit ne soit introduit dans le tube 2 par la goulotte de remplissage 20, puis une seconde soudure transversale 44, quand le produit a été introduit dans le tube 2, pour fermer un emballage autour de ce dernier.

Le film 1 peut être prééquipé des profilés de fermeture 3 avant son arrivée sur le col 10, ou en variante la machine peut comprendre des moyens d'alimentation en profilés de fermeture 3, préférentiellement des profilés 3 à glissière mâle et femelle complémentaires, et des moyens aptes à fixer par soudure lesdits profilés 3 sur le film 1.

Ces machines ont déjà rendu de grands services.

Toutefois, elles ne donnent pas totalement satisfaction. En particulier, on constate parfois la présence de plissages dans les feuilles en matériau thermoplastique composant les parois des emballages obtenus.

D'une part, ces plissages gènent les opérations de soudure transversale en raison des surépaisseurs qu'elles occasionnent et peuvent de ce fait créer des défauts d'étanchéité.

D'autre part, ces plissages détériorent l'esthétique des emballages obtenus.

La Demanderesse a proposé dans la demande de brevet déposée en France le 14 Février 1994 sous le n° 94 01629 un système de déplissage comprenant au moins deux ventouses placées respectivement de part et d'autre des sachets d'emballage et susceptibles de déplacement relatif dans une direction généralement parallèle aux lignes de soudure transversale.

Toutefois, cette proposition ne donne pas toujours totalement satisfaction. En particulier en raison de la charge placée dans chaque sachet, celui-ci prend une forme légèrement bombée, de sorte que l'adhérence et l'efficacité des ventouses est parfois non satisfaisante et que des plissages demeurent par conséquent au-dessus ou au-dessous de la ligne de soudure transversale.

La présente invention a maintenant pour but de perfectionner les machines antérieures connues de formation, remplissage et fermeture automatiques d'emballages à base de films souples, afin de permettre la suppression totale de ces plissages.

Ce but est atteint dans le cadre de la présente invention grâce à un système de déplissage comprenant :
- deux ensembles de pinces conçus pour solliciter des bandes longitudinales diamétralement opposées de l'ébauche tubulaire des sachets d'emballage en position de fermeture de ces ensembles, l'un au moins de ces deux ensembles étant adapté pour autoriser un glissement contrôlé entre les parois de l'ébauche et lesdites pinces, et
- des moyens de commande adaptés d'une part pour déplacer les deux ensembles de pinces d'une position d'ouverture vers la position de fermeture et d'autre part pour déplacer, l'un au moins des deux ensembles vers l'extérieur dans une direction généralement parallèle aux lignes de soudure transversale, lors de la fermeture des machoires de soudure transversale.

D'autres caractéristiques, buts et avantages de la présente invention apparaitront à la lecture de la description détaillée qui va suivre, et en regard des dessins annexés donnés à titre d'exemples non limitatifs et sur lesquels :
- la figure 1 précédemment décrite représente en vue schématique une machine conforme à l'état de la technique,
- les figures 2 à 4 représentent des vues schématiques de dessus des moyens de déplissage conforme à la présente invention au cours de trois étapes différentes de leur processus d'utilisation,
- la figure 5 représente une vue à échelle agrandie d'une pince conforme à la présente invention et de son moyen de commande associé,
- la figure 6 représente une vue similaire d'une pince conforme à la présente invention,
- la figure 7 représente une vue latérale d'un guide pour une pince conforme à la présente invention,
- la figure 8 représente une vue latérale d'un profilé de commande conforme à la présente invention,
- la figure 9 représente une platine porte galet de commande conforme à la présente invention, et
- la figure 10 représente une vue latérale d'un système de déplissage 100 conforme à la présente invention.

Par la suite de la description, on décrira l'invention dans le cadre de la formation de sachets à base de films en matériau thermoplastique. Cependant l'invention peut trouver application dans la formation de sachets à base de films souples de nature différente, par exemple à base d'aluminium ou de papier.

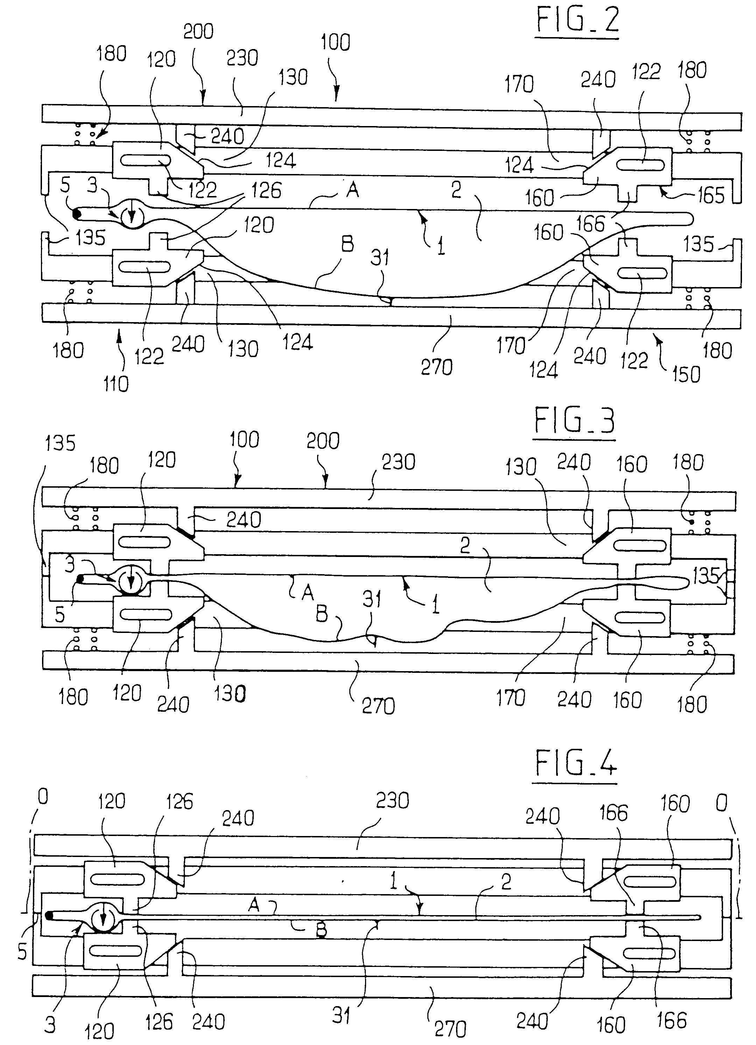

On retrouve sur les figures 2 à 4 annexées, deux feuilles en matière plastique A, B venues du film 1.

On a schématisé sur les figures 2 à 4 annexées sous la référence 31, la soudure longitudinale réalisée à l'aide des moyens connus 30 pour relier les deux bords longitudinaux du film 1 et former ainsi le tube 2.

Sur les figures 2 à 4 annexées, on a schématisé cette soudure longitudinale 31 sensiblement à mi-longueur de la feuille B de matière plastique. En pratique, la soudure longitudinale 31 peut être réalisée en un lieu quelconque des deux feuilles A et B.

On aperçoit également sur les figures 2 à 4 annexées, les profilés de fermeture 3. Ces profilés 3, conçus pour relier de façon amovible et itérative, les feuilles A et B, peuvent faire l'ojet de nombreuses variantes de réalisation connues de l'homme de l'art. Pour cette raison, les profilés 3 sont seulement schématisés sur les figures 2 à 4 annexées. En pratique, les profilés 3 sont formés de préférence d'éléments complémentaires à glissière mâle et femelle. On trouvera des exemples de tels profilés de fermeture 3 dans les documents de technique antérieure cités précédemment.

De préférence, ces profilés 3 sont associés à un cordon intégré au film 1 pour faciliter l'ouverture de celui-ci. De tels cordons destinés à permettre, par traction, la découpe du film 1 sur l'extérieur des profilés 3, sont bien connus de l'homme de l'art. Ils sont appelés généralement "easy open" en langage anglo-saxon. A cette fin, de préférence, les deux profilés 3 sont fixés sur les feuilles A et B du film 1, à distance l'un de l'autre, pour former ainsi sur l'extérieur des profilés 3 une boucle en saillie 4 au sommet de laquelle est placé le cordon d'easy open précité. Ce cordon est référencé 5 sur les figures 2 à 4.

On va maintenant décrire les moyens de déplissage 100 conformes à la présente invention.

Comme indiqué précédemment, ces moyens de déplissage 100 comprennent essentiellement :
. deux ensembles 110, 150 de pinces conçues pour solliciter des bandes longitudinales diamétralement opposées de l'ébauche tubulaire 2 des sachets d'emballage en position de fermeture de ces ensembles, l'un au moins de ces deux ensembles 110, 150 étant adapté pour autoriser un glissement contrôlé entre les parois de l'ébauche 2 et lesdites pinces 110, 150, et
. des moyens de commande 200 adaptés d'une part pour déplacer les deux ensembles de pinces 110, 150 d'une position d'ouverture vers la position de fermeture et d'autre pour déplacer l'un au moins des deux ensembles 110, 150 vers l'extérieur dans une direction généralement parallèle aux lignes de soudure transversale, lors de la fermeture des machoires de soudure transversale 40.

De préférence, le premier ensemble de pinces 110 est conçu pour coopérer avec les profilés de fermeture 3, comme on le voit sur la gauche des figures 2 à 4. Par ailleurs, le second ensemble de pinces 150 est de préférence adapté pour coopérer avec la zone de l'ébauche tubulaire 2 diamétralement opposée à ces profilés de fermeture 3.

Plus précisément, les figures 2 à 4 représentent des vues de dessus de l'ensemble de déplissage 100 conforme à la présente invention, respectivement en position d'ouverture des ensembles de pinces, en position de fermeture et en position de sollicitation vers l'extérieur des films composant les sachets d'emballage.

Il peut être prévu un premier ensemble de déplissage 100 du type illustré sur les figures annexées en aval des moyens de soudure transversale 40, c'est-à-dire sous ces machoires 40 de soudure transversale, et un deuxième ensemble similaire de déplissage 100 en amont de ces machoires de soudure transversale 40, c'est-à-dire au-dessus de celles-ci.

Le cas échéant, cependant, on peut prévoir un seul ensemble de déplissage 100 à pinces du type illustré sur les figures annexées, associé aux machoires de soudure transversale 40, par exemple en aval de celles-ci soit au-dessous de ces machoires 40.

Dans ce dernier cas, il peut être prévu un deuxième système de déplissage, par exemple du type à ventouses, tel que décrit dans la demande de brevet français antérieure déposée le 14 Février 1994 sous le n° 94 01629, de l'autre côté des machoires de soudure transversale, par exemple en amont de celles-ci, soit au-dessus de ces machoires 40.

Plus précisément, chacun des ensembles à pinces 110, 150 conforme à la présente invention, comprend deux coulisseaux 120 pour l'ensemble 110, et 160 pour l'ensemble 150. Ces coulisseaux 120, 160 sont portés par des guides rectilignes 130, 170 respectivement, parallèles entre eux. Ainsi, les coulisseaux 120, 160 sont guidés sur les guides 130, 170, à translation, dans une direction parallèle aux lignes de soudure transversales 42, 44.

De préférence, comme on l'a représenté sur les figures annexées, les guides rectilignes 130, 170 sont communs aux deux ensembles de pinces 110, 150.

Par ailleurs, les moyens de commande de ces ensembles à pinces 110, 150 comprennent deux barreaux 230, 270 généralement rectilignes et parallèles entre eux. Les barreaux 230, 270 sont placés sur l'extérieur des guides 130, 170.

Ces barreaux 230, 270 sont liés respectivement aux deux machoires de soudure transversales 40. Ainsi, les barreaux 230, 270 sont sollicités en rapprochement lors de la fermeture des machoires 40.

On notera que le système de déplissage conforme à la présente invention présente de préférence un plan de symétrie référencé O-O sur les figures annexées et qui coïncide avec, d'une part l'axe de l'ébauche tubulaire 2, d'autre part le plan moyen des sachets d'emballage une fois achevés.

De préférence, un ressort 180 est placé entre chaque extrémité des barreaux de commande 230, 270 et les extrémités correspondantes des guides 130, 170 respectivement associées. Par ailleurs, les barreaux de commande 230, 270 et/ou les guides 130, 170 sont pourvus avantageusement de moyens permettant de régler l'effort exercé par les ressorts 180. Ces moyens de réglage non représentés sur les figures annexées pour simplifier l'illustration peuvent être formées simplement de vis en prise avec les barreaux de commande 230, 270 et/ou les guides 130, 170, en regard des points d'appui des ressorts 180.

L'homme de l'art comprendra que ces ressorts 180 sollicitent en écartement les barreaux de commande 230, 270 et les guides respectivement associés 130, 170, au repos.

Les coulisseaux 120, 170 peuvent être guidés à translation horizontale sur les guides 130, 170, soit parallèlement aux soudures transversales 42, 44 et parallèlement au plan de symétrie O-O par tout moyen approprié.

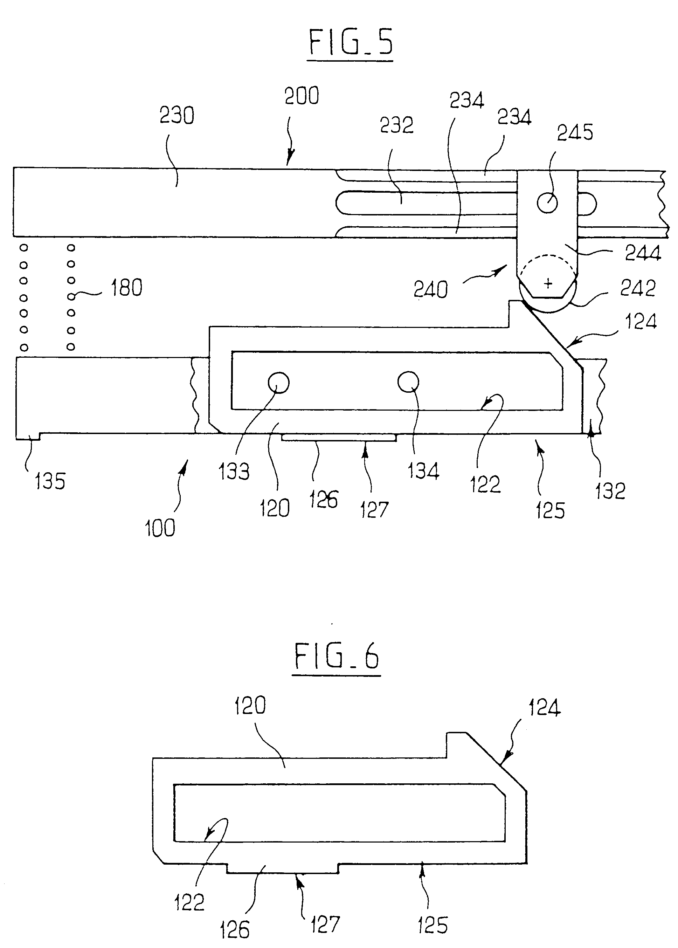

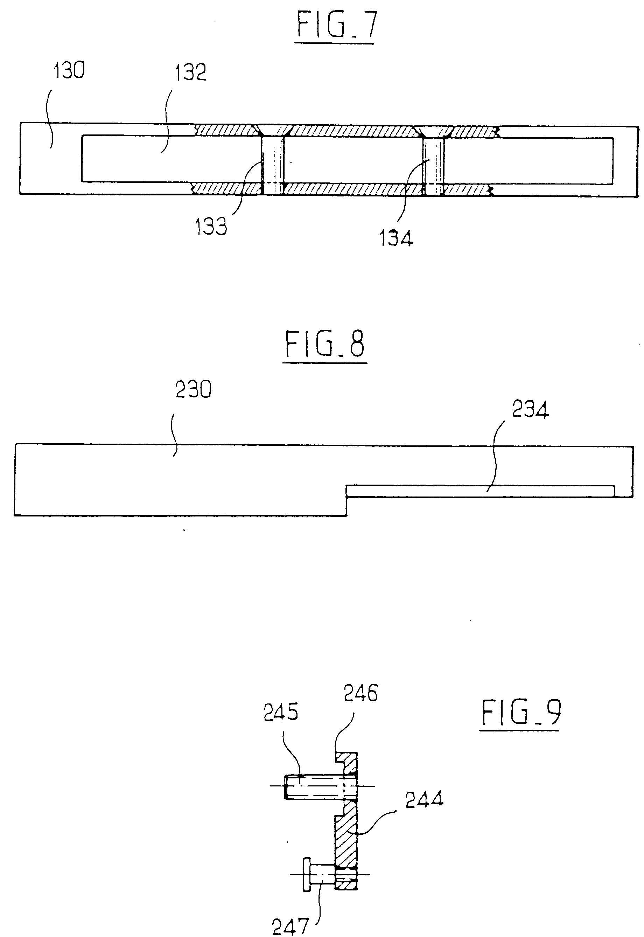

En l'espèce, selon le mode de réalisation préférentiel représenté sur les figures annexées, comme on le voit notamment sur les figures 5 et 7, chaque guide 130, 170 est pourvu au voisinage de chacune de ces extrémités d'une lumière longitudinale 132 traversante, qui débouchent latéralement d'un côté en regard du plan de symétrie O-O, et de l'autre côté en regard d'un barreau de commande 230, 270. Chaque coulisseau 120, 160 possède une hauteur complémentaire de la hauteur de la lumière 132 précitée.

Par ailleurs, les coulisseaux 120, 160 sont de préférence maintenus dans la lumière 132 précitée par tout moyen approprié, par exemple à l'aide de vis 133, 134 en prise avec les flancs de guide 130, 170 et introduites dans un évidemment longitudinal 122 formé dans chaque coulisseau 120, 160.

Chaque coulisseau 120, 160 est muni sur sa face latérale dirigée vers les barreaux de commande 230, 270 d'une came 124. Cette came 124 coopère avec des moyens de sollicitation 240 prévus en regard sur les barreaux de commande 230, 270.

Plus précisément, selon le mode de réalisation préférentiel représenté sur les figures annexées, les cames 124 sont formées de rampes planes qui convergent vers le plan de symétrie O-O, en direction de l'axe de symétrie de l'ébauche tubulaire 2.

Les moyens de sollicitation 240 sont quant à eux formés de préférence d'un galet 242 portés par une platine 244. Le galet 242 est adapté pour rouler sur la came 124 associée.

La platine 244 est portée par un barreau de commande respectif 230 ou 270.

De préférence, la platine 244 est réglable en longueur sur le barreau de commande 230, 270. A cet effet, la platine 244 peut être pourvue par exemple d'un goujon 245 susceptible d'être déplacé et serré dans une lumière 232 du barreau de commande 230, 270. Comme on le voit à l'examen comparé des figures 5, 8 et 9, la platine 244 est pourvue en outre de préférence de structures en saillie 246 apte à pénétrer dans des rainures ou nervures complémentaires 234 formées sur les barreaux de commande 230, 270, afin de définir une position univoque entre la platine 244 et le barreau de commande 230, 270.

Sur la figure 9, on a référencé 247 un tourillon porté par la platine 244 et susceptible de guider à rotation le galet 242.

Pour cela, l'axe du tourillon 247 s'étend parallèlement au plan de symétrie O-O et à l'axe de l'ébauche tubulaire 2.

Par ailleurs, les coulisseaux 120 de l'ensemble 110 comprennent chacun un doigt 126 en saillie sur leur face interne 125 dirigée vers le plan de symétrie O-O.

Ces doigts 126 constituent des butées aptes à solliciter radialement vers l'extérieur des profilés de fermeture 3.

Cependant, pour permettre aux plissages éventuels de se détendre à ce niveau, il est prévu des moyens imposant un certain jeu entre les films A, B et les surfaces internes 127 des doigts 126, en position de fermeture des pinces, comme illustré sur les figures 3 et 4.

De préférence ce jeu est imposé par des talons 135 prévus sur les guides 130, 170, lesquels talons 135 viennent en contact mutuel en position de fermeture des ensembles de pinces.

L'homme de l'art comprendra que pour imposer un tel jeu, il est nécessaire que la hauteur cumulée des deux talons 135 soit supérieure à la somme de la hauteur cumulée des deux doigts en saillie 126 par rapport aux guides 130, 170 et à l'épaisseur des deux films A et B.

Les coulisseaux 170 prévus sur l'ensemble de pinces 150 comprennent quant à eux, sur leur surface interne 165, des patins 166 aptes à venir reposer sur la surface externe des films A et B. Ces patins 166 sont réalisés en un matériau approprié pour autoriser un glissement contrôlé patins/films A ou B.

De préférence, ces patins 166 sont formés de pièces rapportées fixées dans un fraisage réalisé sur la surface extérieure 127, des coulisseaux 160. Bien entendu, ces patins doivent faire saillie au moins sur une partie de ces surfaces 127.

Avantageusement, ces patins 166 sont réalisés en polytétrafluoroéthylène.

Le fonctionnement du système de déplissage 100 conforme à la présente invention est essentiellement le suivant.

Lorsque le film 1 formant l'ébauche tubulaire 2 est avancé séquentiellement sur la machine, les ensembles de pinces 110, 150 du système de déplissage 100 sont placés en position d'ouverture, comme illustré sur la figure 2.

Une fois le film 1 avancé d'un pas pour la formation d'un sachet d'emballage, les machoires de soudure transversale 40 sont sollicitées à la fermeture pour réaliser la ligne de soudure transversale 44.

Au cours de cet entraînement, les ensembles de pinces 110, 150 sont tout d'abord sollicités en position de fermeture, comme illustré sur la figure 3.

Le déplacement en rapprochement du plan de symétrie O-O, des barreaux de commande 230, 270, qui en résulte, rapproche également les guides 130, 170, et par conséquent les coulisseaux 120, 160 respectivement. Les doigts 126 des coulisseaux 120 viennent ainsi prendre position près des profilés de fermeture 3. De façon symétrique, les patins 166 viennent prendre appui sur les films A, B.

A la fin de la course de rapprochement des machoires de soudure transversale 40, la coopération définie entre les galets 242 et les cames 124 sollicite les doigts 120, 160, respectivement vers l'extérieur, radialement par rapport à l'axe de l'ébauche tubulaire 2.

Ainsi, l'entraînement à translation des coulisseaux 120, 160 sur les guides respectifs 130, 170 sollicite dans des directions opposées, d'une part les profilés de fermeture 3 et d'autre part la zone diamétralement opposée de l'ébauche tubulaire 2, comme on le voit sur la figure 4.

Du côté des profilés de fermeture 3 le déplissage est autorisé grâce au jeu imposé entre les doigts 126.

De l'autre côté le déplissage est autorisé grâce au glissement possible entre la surface extérieure des parois A, B du film et la surface des patins 166.

Les moyens de déplissage 100 conformes à la présente invention peuvent être installés sur des machines existantes.

Les moyens de déplissage 100 conformes à la présente invention autorisent des cadences de fabrication élevées et évitent tout défaut dans les parois des sachets.

Bien entendu la présente invention n'est pas limitée au mode de réalisation particulier qui vient d'être décrit mais s'étend à toute variante conforme à son esprit.

En particulier, si l'invention s'applique aux films en matériau thermoplastique munis de profilés de fermeture à glissière mâle et femelle complémentaires comme indiqués précédemment, l'invention n'est pas limitée à l'utilisation de ce type particulier de profilés. Elle s'étend à tout type de profilés susceptibles d'équiper un film d'emballage, tels que par exemple des cordons intégrés aux films pour faciliter l'ouverture de celui-ci, des liserés de décoration par exemple des liserés colorés, ou encore des liserés gradués pour le repérage du volume de produit contenu dans l'emballage.

L'invention peut également s'appliquer à la formation d'emballages à base de films souples dépourvus de profilés en remplaçant l'ensemble de pinces 110 précité coopérant avec les profilés, par un ensemble de pinces 150 à patin autorisant un glissement contrôlé patin/film comme décrit pour la zone diamétralement opposée des sachets.

Par ailleurs, l'invention concerne également, bien entendu, des emballages obtenus par la mise en oeuvre de la machine précitée.

Selon une variante, on peut bien entendu prévoir d'inverser la position relative des galets 242 et des rampes ou cames 124, c'est-à-dire que l'on peut placer les galets 242 sur les coulisseaux 120, 160, et placer inversement les cames 124 sur les barreaux de commande 230, 270.

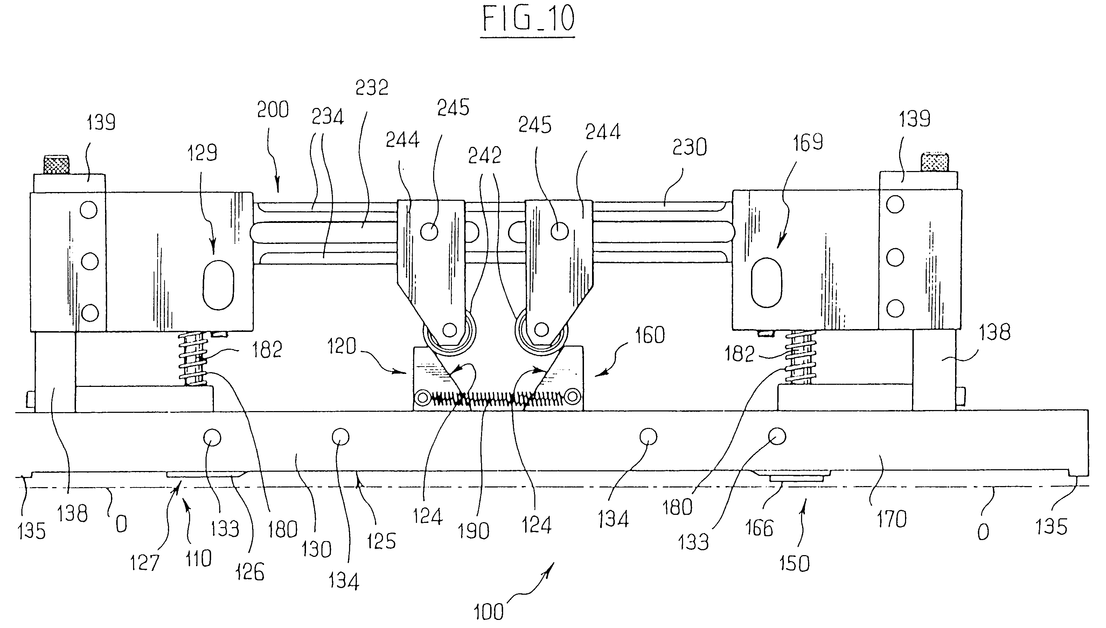

On a représenté sur la figure 10, un demi-système de déplissage conforme à la présente invention.

Le système de déplissage complet comprend un seconde semi-système symétrique de celui représenté sur la figure 10 par rapport au plan O-O.

On retrouve notamment sur la figure 10, les deux ensembles de pinces 110, 150 comprenant des coulisseaux 120, 160 montés sur des guides rectilignes 130, 170 pourvus respectivement d'un doigt en saillie 126 et d'un patin 166, lesquels coulisseaux 120, 160 sont actionnés grâce à des cames 124 par des doigts 242 portés par des platines 244 réglables à déplacement longitudinal sur un barreau de commande 230.

On notera en outre à l'examen de la figure 10 que de préférence, il est prévu un ressort 190 qui sollicite les coulisseaux 120, 160 vers leur position de repos rapproché, comme visible sur la figure 10, avant sollicitation par les galets 242. Ce ressort 190 est avantageusement, un ressort de traction fixé entre les deux coulisseaux 120, 160.

Sur la figure 10, on a référencé 129 et 169 respectivement des lumières oblongues formées dans le barreau de commande 230, 270 allongées dans une direction parallèle à la direction de déplacement de ces barreaux 230, 270 soit transversalement au film A, B. Ces lumières 129, 169 sont destinées à recevoir des doigts liés aux mâchoires de soudure 40 pour assurer la liaison d'entraînement entre ces mâchoires 40 et les barreaux de commande 230, 270.

Le cas échéant, cette coopération peut être avec perte de course et éventuellement avec ressort intercalé pour permettre un débattement relatif entre les mâchoires de soudure 40 et les barreaux de commande 230, 270.

Sur la figure 10, on distingue en outre des colonnes 182 conçues pour centrer les ressorts 180. On distingue également des colonnes 138 liées au guide 130, 170 pour assurer le guidage à déplacement relatif entre les barreaux de commande 230, 270 et les guides 130, 170.

De préférence, les colonnes 138 sont munies de butées 139 limitant le déplacement des barreaux de commande 230, 270 sous l'effet des ressorts 180.

## Revendications

1. Machine de formation, remplissage et fermeture automatique d'emballages à base de films (1) en matériau souple, par exemple thermoplastique, en particulier de films munis de profilés de fermeture (3), notamment de profilés de fermeture à glissière mâle et femelle complémentaires, comprenant des moyens qui assurent l'avancement séquencé du film conformé en tube et des moyens aptes à générer séquentiellement une première soudure transversale (42) avant qu'un produit ne soit introduit dans le tube, puis une seconde soudure transversale (44) quand le produit a été introduit dans le tube, pour former un emballage autour de ce dernier, caractérisée par le fait qu'elle comprend en outre un système de déplissage (100) comprenant :
- deux ensembles de pinces (110, 150) conçus pour solliciter des bandes longitudinales diamétralement opposées de l'ébauche tubulaire (2) des sachets d'emballage en position de fermeture de ces ensembles, l'un au moins de ces deux ensembles (110, 150) étant adapté pour autoriser un glissement contrôlé entre les parois (A, B) de l'ébauche (2) et lesdites pinces (110, 150), et
- des moyens de commande (230, 270) adaptés d'une part pour déplacer les deux ensembles de pinces (110, 150) d'une position d'ouverture vers la position de fermeture et d'autre part pour déplacer, l'un au moins des deux ensembles (110, 150) vers l'extérieur dans une direction généralement parallèle aux lignes de soudure transversale (42, 44), lors de la fermeture des machoires de soudure transversale (40).

2. Machine selon la revendication 1, caractérisée par le fait que l'un des ensembles de pinces (110) coopère avec les profilés de fermeture (3) tandis que le second ensemble de pinces (150) coopère avec la zone de l'ébauche tubulaire (2) diamétralement opposée à ces profilés de fermeture (3).

3. Machine selon l'une des revendications 1 ou 2, caractérisée par le fait que chaque ensemble de pinces (110, 150) comprend deux coulisseaux (120, 160) guidés à translation sur des guides rectilignes (130, 170).

4. Machine selon l'une des revendications 1 à 3, caractérisée par le fait que les moyens de commande (200) comprennent deux barreaux de sollicitation liés respectivement aux machoires de soudure transversale (40).

5. Machine selon l'une des revendications 1 à 4, caractérisée par le fait que des ressorts (180) sont intercalés entre des guides (130, 170) des ensembles de pinces (110, 150) et des barreaux de commande (230, 270).

6. Machine selon l'une des revendications 1 à 5, caractérisée par le fait que chaque ensemble de pinces (110, 150) comprend deux coulisseaux (120, 160) pourvus de cames (124).

7. Machine selon la revendication 6, caractérisée par le fait que les cames (124) convergent en rapprochement d'un plan de symétrie de l'ensemble de déplissage, en direction d'un axe de symétrie de l'ébauche tubulaire.

8. Machine selon l'une des revendications 1 à 7, caractérisée par le fait qu'un premier ensemble de pinces (110) comprend deux coulisseaux (120) pourvus chacun d'un doigt (126) susceptible de servir de butée à un profilé de fermeture (3).

9. Machine selon la revendication 8, caractérisée par le fait qu'il comprend des moyens (135) aptes à imposer un jeu entre les doigts formant butée (126) en position de fermeture du système de déplissage.

10. Machine selon la revendication 9, caractérisée par le fait que les moyens imposant un jeu entre les doigts formant butée (126) sont formés de talons (135) prévus sur des guides (130, 170).

11. Machine selon l'une des revendications 1 à 10, caractérisée par le fait que l'un des ensembles de pinces comprend deux coulisseaux (160) pourvu chacun d'un patin (166) conçu pour autoriser un glissement contrôlé entre ledit patin et le film (A, B) constituant l'emballage.

12. Machine selon la revendication 11, caractérisée par le fait que les patins sont réalisés en polytétrafluoroéthylène (166).

13. Machine selon l'une des revendications 1 à 12, caractérisée par le fait qu'un système de déplissage (100) est prévu respectivement de chaque côté des machoires de soudure transversale (40) soit respectivement en amont et en aval de ces machoires.

14. Machine selon l'une des revendications 1 à 12, caractérisée par le fait qu'un système de déplissage (100) est prévu au moins en amont ou en aval des machoires de soudure transversale (40).

15. Machine selon l'une des revendications 1 à 12, caractérisée par le fait qu'un système de déplissage (100) comprenant deux ensembles (110, 150) de pinces et des moyens de commande (200) est prévu d'un côté des machoires de soudure transversale (40) et, qu'il est prévu de l'autre côté de ces machoires un autre système de déplissage comprenant au moins deux ventouses placées respectivement de part et d'autre des sachets d'emballage et susceptibles de déplacement relatif dans une direction générale parallèle aux lignes de soudure transversale.

16. Machine selon l'une des revendications 1 à 15, caractérisée par le fait que les moyens de commande (230, 270) comprennent des organes d'actionnement (242) réglables en longueur.

17. Machine selon la revendication 16, caractérisée par le fait que les organes d'actionnement comprennent des galets (242).

18. Machine selon l'une des revendications 1 à 17, caractérisée par le fait qu'il comprend des moyens (190) de rappel des coulisseaux (120, 160) en position de repos.

19. Machine selon la revendication 18, caractérisée par le fait que les moyens de rappel sont formés d'un ressort de traction (190) placé entre deux coulisseaux (120, 160).

20. Machine selon l'une des revendications 1 à 19, caractérisée par le fait qu'il est prévu une liaison d'entrainement avec perte de course, de péférence élastique, entre les moyens de commande (230, 270) et les mâchoires de soudure transversale (40).

21. Emballage obtenu à l'aide d'une machine conforme à l'une des revendications 1 à 20.
